(19) Europäisches Patentamt

European Patent Office

Office européen des brevets

(11) **EP 2 810 106 B1**

(12) **EUROPEAN PATENT SPECIFICATION**

(45) Date of publication and mention
of the grant of the patent:
**12.06.2019 Bulletin 2019/24**

(21) Application number: **12868954.4**

(22) Date of filing: **20.02.2012**

(51) Int Cl.:
*G01V 9/00* *(2006.01)*    *E21B 47/08* *(2012.01)*

(86) International application number:
**PCT/US2012/025820**

(87) International publication number:
**WO 2013/126040 (29.08.2013 Gazette 2013/35)**

(54) **DOWNHOLE FORMATION TESTING WITH AUTOMATION AND OPTIMIZATION**

BOHRLOCHFORMIERUNGSTEST MIT AUTOMATISIERUNG UND OPTIMIERUNG

ESSAIS DE FORMATIONS EN FOND DE TROU AVEC AUTOMATION ET OPTIMISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.12.2014 Bulletin 2014/50**

(73) Proprietor: **Halliburton Energy Services, Inc.
Houston, TX 77072 (US)**

(72) Inventors:
• **PROETT, Mark A.
Missouri City, Texas 77459 (US)**
• **VAN ZUILEKOM, Anthony Herman
Houston, Texas 77064 (US)**

(74) Representative: **Jennings, Michael John et al
A.A. Thornton & Co.
10 Old Bailey
London EC4M 7NG (GB)**

(56) References cited:
**US-A1- 2004 026 125    US-A1- 2011 011 174
US-B2- 6 843 118        US-B2- 6 923 052
US-B2- 7 210 344**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

During the drilling and completion of oil and gas wells, it may be necessary to engage in ancillary operations, such as evaluating the production capabilities of formations intersected by the wellbore. For example, after a well or well interval has been drilled, zones of interest are often tested or sampled to determine various formation properties such as permeability, fluid type, fluid quality, formation temperature, formation pressure, bubblepoint and formation pressure gradient. These tests are performed in order to determine whether commercial exploitation of the intersected formations is viable and how to optimize production. The acquisition of accurate data from the wellbore is critical to the optimization of hydrocarbon wells. This wellbore data can be used to determine the location and quality of hydrocarbon reserves, whether the reserves can be produced through the wellbore, and for well control during drilling operations.

Downhole formation testing often involves a complex set of procedures to draw formation fluids into the formation tester and properly analyze the fluid sample. For example, a probe must be properly extended and engaged with the formation. Internal pistons and pumps must be properly adjusted and actuated to induce the proper fluid flow rate from the formation and into the formation tester. Pressure buildup times must be properly set to obtain the best possible test results. Formation testers also have operational limitations which must be considered in the testing control parameters. These are but some of the features of formation testing, and to perform a successful formation test requires a highly trained operator. Such training can be rare and costly, and inevitably includes manual error. Even with a highly trained and experienced operator, the numerous variables that are part of the formation testing process must be considered and managed. Failure to do so is common and leads to sub-optimal testing. The principles of the present disclosure overcome these and other limitations of the prior art.

US 2004/026125 A1 discloses a method and apparatus for determining a formation parameter of interest. The method includes placing a tool into communication with the formation to test the formation, determining a first formation characteristic during a first test portion, initiating a second test portion, the second test portion having test parameters determined at least in part by the determinations made during the first test portion, determining a second formation characteristic during the second test portion, and determining the formation parameter from one of the first formation characteristic and the second formation characteristic.

**BRIEF DESCRIPTION OF THE DRAWINGS**

For a detailed description of exemplary embodiments, reference will now be made to the accompanying drawings in which:

Figure 1 is a schematic view, partly in cross-section, of a drilling apparatus with a formation tester;
Figure 2 is a schematic view, partly in cross-section, of a formation tester conveyed by wireline;
Figure 3 is a schematic view, partly in cross-section, of a formation tester disposed on a wired drill pipe connected to a telemetry network;
Figure 4 is a cross-section view of a section of wired drill pipe including a wired tool;
Figure 5 is a side view, partly in cross-section, of a drill collar including a formation probe assembly;
Figure 6 is a schematic view of a single probe formation tester;
Figure 7 is a schematic view of a dual probe formation tester;
Figure 8 is a flow diagram of an embodiment of a formation testing method in accordance with the principles described herein;
Figure 9 is a flow diagram of another embodiment of a formation testing method in accordance with the principles described herein;
Figure 10 is a flow diagram of still another embodiment of a formation testing method in accordance with the principles described herein; and

Appendix A includes Tables 1-4 and Graphs 1-7.

**DETAILED DESCRIPTION**

In the drawings and description that follow, like parts are typically marked throughout the specification and drawings with the same reference numerals. The drawing figures are not necessarily to scale. Certain features of the disclosure may be shown exaggerated in scale or in somewhat schematic form and some details of conventional elements may not be shown in the interest of clarity and conciseness. The present disclosure is susceptible to embodiments of different forms. Specific embodiments are described in detail and are shown in the drawings, with the understanding that the present disclosure is to be considered an exemplification of the principles of the disclosure, and is not intended to limit the disclosure to that illustrated and described herein. It is to be fully recognized that the different teachings of the embodiments discussed below may be employed separately or in any suitable combination to produce desired results.

In the following discussion and in the claims, the terms "including" and "comprising" are used in an open-ended fashion, and thus should be interpreted to mean "including, but not limited to ...". Unless otherwise specified, any use of any form of the terms "connect", "engage", "couple", "attach", or any other term describing an interaction between elements is not meant to limit the interaction to direct interaction between the elements and may also include indirect interaction between the elements described. Reference to up or down will be made for purposes of description with "up", "upper", "upwardly" or "upstream" meaning toward the surface of the well and with "down", "lower", "downwardly" or "downstream" meaning toward the terminal end of the well, regardless of the well bore orientation. In addition, in the discussion and claims that follow, it may be sometimes stated that certain components or elements are in fluid communication. By this it is meant that the components are constructed and interrelated such that a fluid could be communicated between them, as via a passageway, tube, or conduit. Also, the designation "MWD" or "LWD" are used to mean all generic measurement while drilling or logging while drilling apparatus and systems. The various characteristics mentioned above, as well as other features and characteristics described in more detail below, will be readily apparent to those skilled in the art upon reading the following detailed description of the embodiments, and by referring to the accompanying drawings.

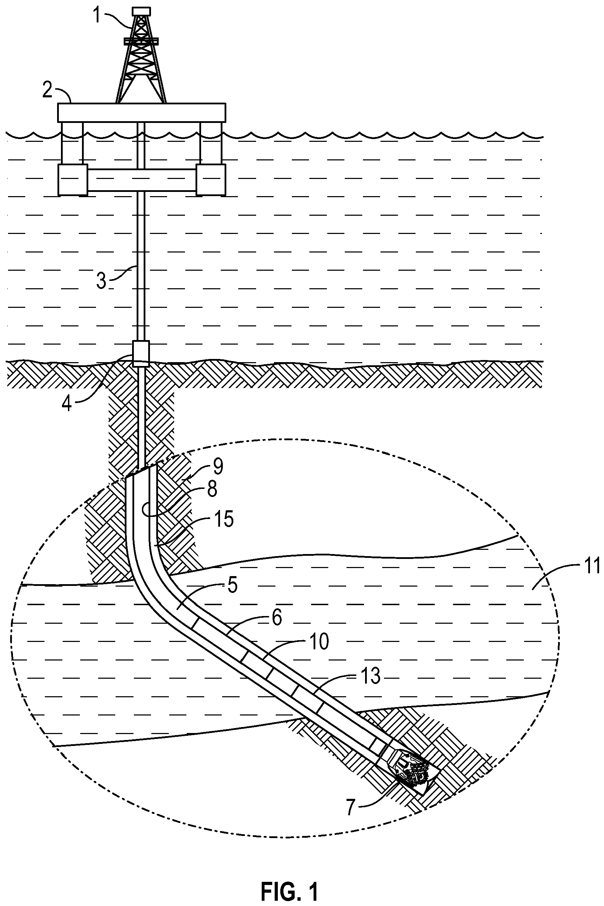

Referring initially to Figure 1, a drilling apparatus including a formation tester is shown. A formation tester 10 is shown enlarged and schematically as a part of a bottom hole assembly 6 including a sub 13 and a drill bit 7 at its distal most end. The bottom hole assembly 6 is lowered from a drilling platform 2, such as a ship or other conventional land platform, via a drill string 5. The drill string 5 is disposed through a riser 3 and a well head 4. Conventional drilling equipment (not shown) is supported within a derrick 1 and rotates the drill string 5 and the drill bit 7, causing the bit 7 to form a borehole 8 through formation material 9. The drill bit 7 may also be rotated using other means, such as a downhole motor. The borehole 8 penetrates subterranean zones or reservoirs, such as reservoir 11, that are believed to contain hydrocarbons in a commercially viable quantity. An annulus 15 is formed thereby. In addition to the formation tester 10, the bottom hole assembly 6 contains various conventional apparatus and systems, such as a down hole drill motor, a rotary steerable tool, a mud pulse telemetry system, MWD or LWD sensors and systems, downhole memory and processor, and others known in the art.

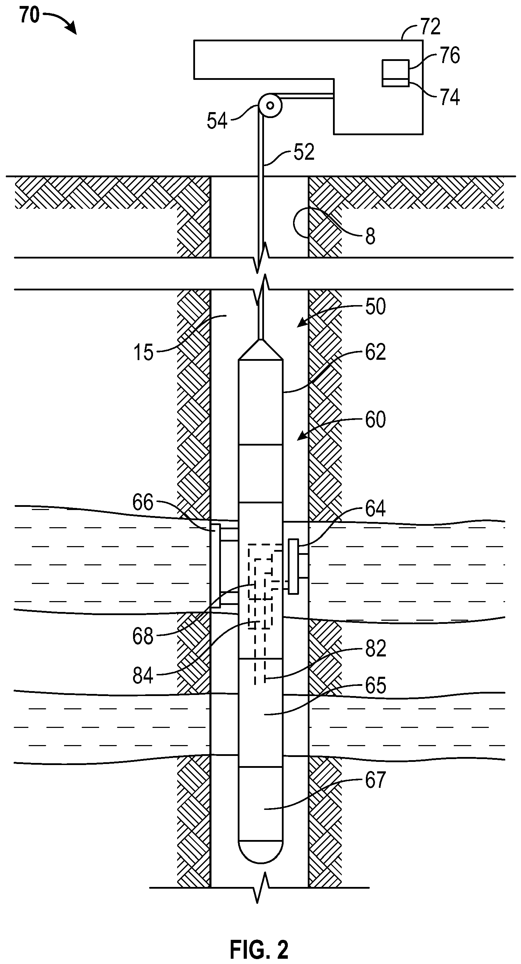

In some embodiments, and with reference to Figure 2, a formation testing tool 60 is disposed on a tool string 50 conveyed into the borehole 8 by a cable 52 and a winch 54. The testing tool includes a body 62, a sampling assembly 64, a backup assembly 66, analysis modules 68, 84 including electronic devices, a flowline 82, a battery module 65, and an electronics module 67. The formation tester 60 is coupled to a surface unit 70 that may include an electrical control system 72 having an electronic storage medium or memory 74 and a control processor 76. In other embodiments, the tool 60 may alternatively or additionally include an electrical control system, an electronic storage medium and a processor.

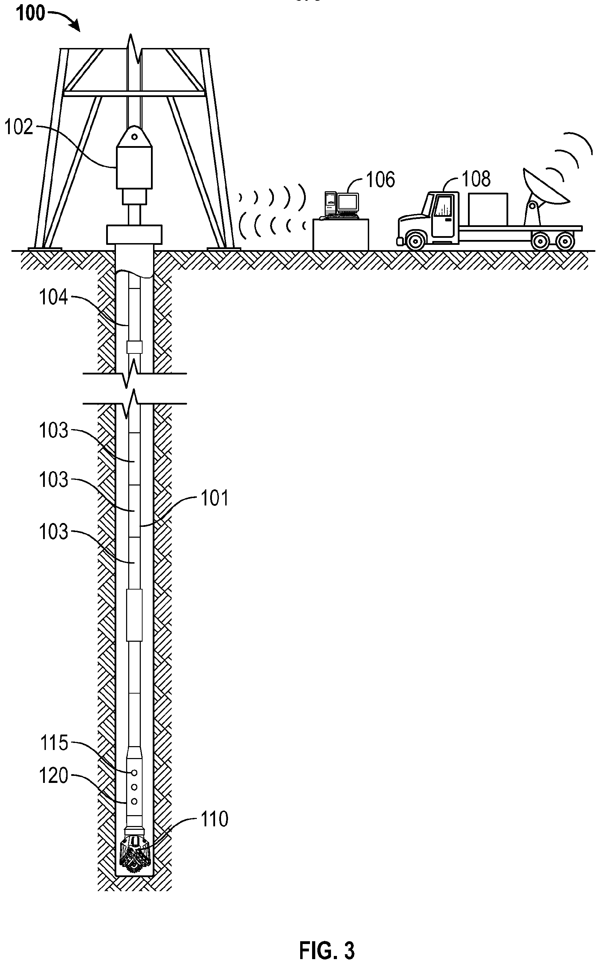

Referring to Figure 3, a telemetry network 100 is shown. A formation tester 120 is coupled to a drill string 101 formed by a series of wired drill pipes 103 connected for communication across junctions using communication elements. It will be appreciated that work string 101 can be other forms of conveyance, such as wired coiled tubing. The downhole drilling and control operations are interfaced with the rest of the world in the network 100 via a top-hole repeater unit 102, a kelly 104 or top-hole drive (or, a transition sub with two communication elements), a computer 106 in the rig control center, and an uplink 108. The computer 106 can act as a server, controlling access to network 100 transmissions, sending control and command signals downhole, and receiving and processing information sent uphole. The software running the server can control access to the network 100 and can communicate this information via dedicated land lines, satellite uplink 108), Internet, or other means to a central server accessible from anywhere in the world. The formation tester 120 is shown linked into the network 100 just above the drill bit 110 for communication along its conductor path and along the wired drill string 101.

The formation tester 120 may include a plurality of transducers 115 disposed on the formation tester 120 to relay downhole information to the operator at surface or to a remote site. The transducers 115 may include any conventional source/sensor (e.g., pressure, temperature, gravity, etc.) to provide the operator with formation and/or borehole parameters, as well as diagnostics or position indication relating to the tool. The telemetry network 100 may combine multiple signal conveyance formats (e.g., mud pulse, fiber-optics, acoustic, EM hops, etc.). It will also be appreciated that software/firmware may be configured into the formation tester 120 and/or the network 100 (e.g., at surface, downhole, in combination, and/or remotely via wireless links tied to the network).

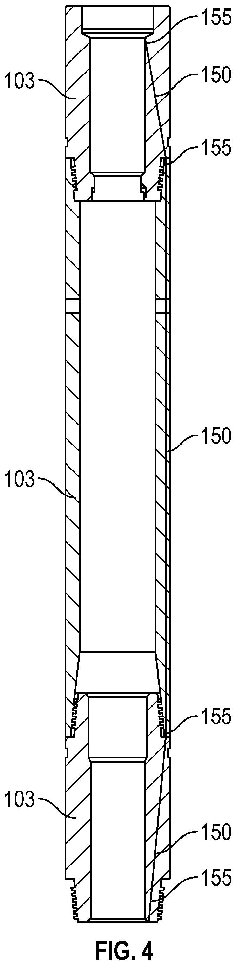

Referring briefly to Figure 4, sections of wired drill pipe 103 are enlarged for clarity. The wired drill pipe 103 includes conductors 150 that traverse the entire length of the pipe sections. Communication elements 155 allow the transfer of power and/or data between the pipe sections 103. A data/power signal may be transmitted along a pipe section of the wired drill string, such as the pipe section with formation tester 120 (Figure 3), from one end through the conductor(s) 150 to the other end across the communication elements 155. In some embodiments, the conductor(s) 150 comprise coaxial cables, copper wires, optical fiber cables, triaxial cables, and twisted pairs of wire. The conductor(s) 150 may be disposed through a hole formed in the walls of the outer tubular members of the pipes 103. The communication elements 155 may comprise inductive couplers, direct electrical contacts, optical couplers, and combinations thereof. Portions of the wired drill pipes 103 may be subs or other connections means. The ends of subs or connections means of the wired subs 103 are configured to communicate within the downhole telemetry network 100.

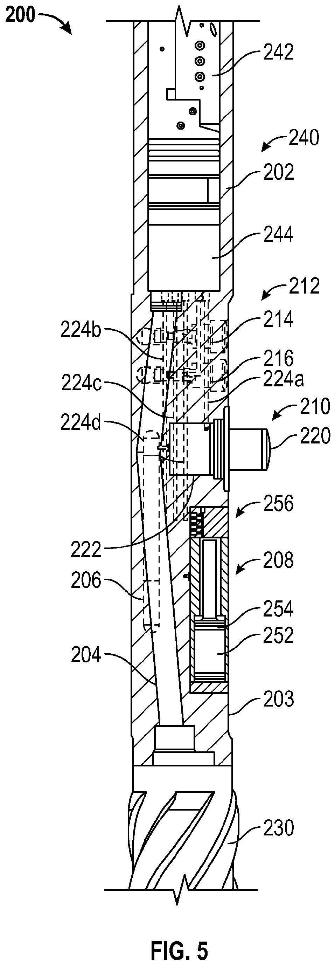

Referring next to Figure 5, an embodiment of an MWD formation probe collar section 200 is shown in detail, which may be used as the tool 10 in Figure 1 or the tool 120 in Figure 3. A drill collar 202 houses the formation tester or probe assembly 210. The probe assembly 210 includes various components for operation of the probe assembly 210 to receive and analyze formation fluids from the earth formation 9 and the reservoir 11. An extendable probe member 220 is disposed in an aperture 222 in the drill collar 202 and extendable beyond the drill collar 202 outer surface, as shown. The probe member 220 is retractable to a position recessed beneath the drill collar 202 outer surface. The probe assembly 210 may include a recessed outer portion 203 of the drill collar 202 outer surface adjacent the probe member 220. The probe assembly 210 includes a drawdown or piston accumulator assembly 208, a sensor 206, a valve assembly 212 having a flow line shutoff valve 214 and equalizer valve 216, and a drilling fluid flow bore 204. At one end of the probe collar 200, generally the lower end when the tool 10 is disposed in the borehole 8, is an optional stabilizer 230, and at the other end is an assembly 240 including a hydraulic system 242 and a manifold 244.

The piston assembly 208 includes a piston chamber 252 containing a piston 254 and a manifold 256 including various fluid and electrical conduits and control devices. The piston assembly 208, the probe 220, the sensor 206 (*e.g.,* a pressure gauge) and the valve assembly 212 communicate with each other and various other components of the probe collar 200, such as the manifold 244 and hydraulic system 242, as well as the tool 10 via conduits 224a, 224b, 224c and 224d. The conduits 224a, 224b, 224c, 224d include various fluid flow lines and electrical conduits for operation of the probe assembly 210 and probe collar 200.

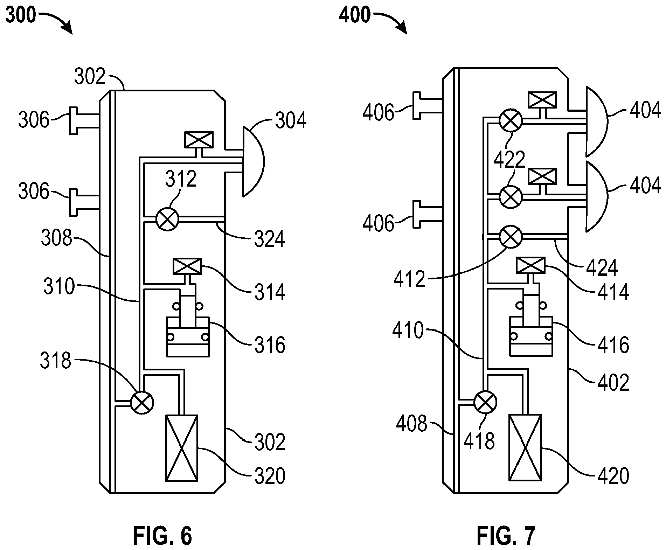

Referring now to Figures 6 and 7, schematic representations of a single probe formation tester 300 and a dual probe formation tester 400 are shown with internal details. In Figure 6, the formation tester 300 includes a tool body or collar 302 supporting an extendable probe 304. In some embodiments, the body 302 also supports backup pistons 306. A primary tool flowline 308 extends longitudinally through the tool body 302 and fluidicly couples to a formation fluid sample flowline 310 through an isolation valve 318. The probe 304 is coupled to the formation fluid sample flowline 310. Also coupled into the formation fluid sample flowline 310 is an equalization valve 312 that vents to the borehole annulus through a port 324, a pretest piston 316 and a strain gauge 314, and a quartz gauge 320.

In Figure 7, the formation tester 400 includes a tool body or collar 402 supporting a pair of extendable probes 404. In some embodiments, the body 402 also supports backup pistons 406. A primary tool flowline 408 extends longitudinally through the tool body 402 and fluidicly couples to a formation fluid sample flowline 410 through an isolation valve 418. The probes 404 are coupled to the formation fluid sample flowline 410. Also coupled into the formation fluid sample flowline 310 are probe valves 422, an equalization valve 412 that vents to the borehole annulus through a port 424, a pretest piston 416 and a strain gauge 414, and a quartz gauge 420.

Formation testing using the various formation testers described above, as well as other similar formation testers known in the industry, requires highly trained operators to manually set formation testing parameters and controls in an attempt to obtain the best results possible. For example, a skilled operator must set appropriate flow rates and buildup times for the components of the formation testers described herein such that the formation fluids can be properly measured for useable results. As will be described below, the principles of the present disclosure are embodied in various methods and systems for optimizing the testing mode, parameters, and controls for a formation tester. In some embodiments, the method is partially optimized by automating the testing mode and procedure and the adjustability of the parameters and controls. In some embodiments, the testing modes for the single and dual probe formation testers 300, 400 of Figures 6 and 7 are optimized.

In some embodiments, an automated and optimized formation testing method includes controlling the testing procedure based on multiple criteria and parameters as will be further detailed below. In some embodiments, the method is based on a set of test criteria and/or control parameters used to target a test objective. In further embodiments, a set of formation tester tool parameters or specifications based on the operating range and limitations of the formation tester supplements the method. For purposes of the following description, the formation testers of Figures 5-7 will be referred to, including the drawdown piston 208 and the pretest pistons 316, 416; but, it is understood that other types of formation testers and measurements are contemplated and consistent with the teachings herein.

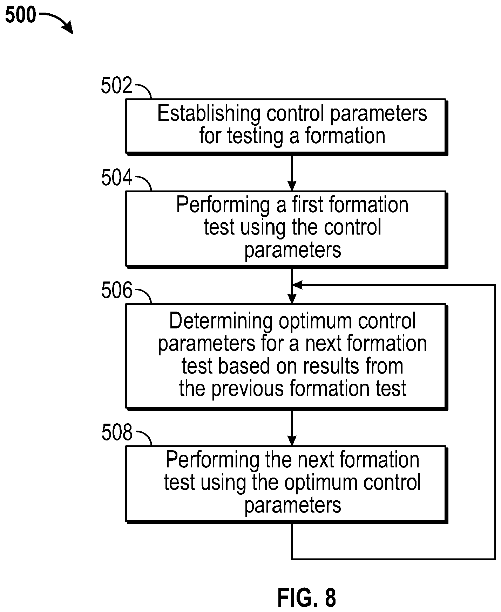

Upon a first drawdown using the drawdown piston 208 and the corresponding probe assembly 210 of Figure 5, or a first pretest using the pretest pistons 316, 416 and the corresponding probes 304, 404, little formation information is available but certain initial control parameters and/or test criteria may be determined, set, and used. Based on such an initial test, the resulting new information is used to further refine the control parameters for the subsequent or next pressure test. Referring now to Figure 8, an embodiment of an adjustable and optimized formation testing method includes establishing control parameters for testing a formation at 502, performing a first formation test using the control parameters at 504, determining optimum control parameters for a next formation test based on results from the immediately preceding formation test at 506, performing the next formation test using the optimum control parameters, and then returning the process back to just before the step 506 and determining optimum control parameters based on the immediately preceding formation test.

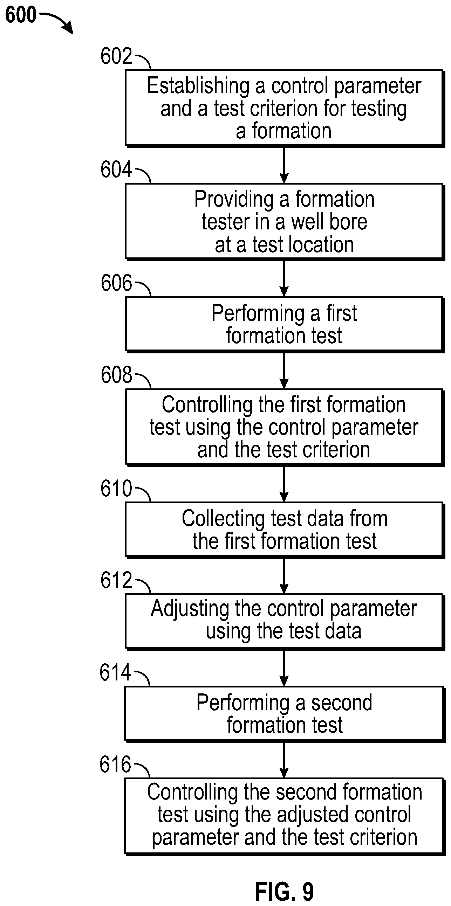

In some further embodiments, a control parameter as well as a test criterion are established prior to a first formation test. Referring now to Figure 9, an embodiment of an adjustable and optimized formation testing method 600 includes establishing a control parameter (or parameters) and a test criterion (or criteria) for testing a formation at 602, providing a formation tester in a well bore at a test location at 604, wherein the formation tester includes or is equipped with the control parameter and the test criterion, performing a first formation test at 606, controlling the first formation test using the control parameter and the test criterion at 608, collecting test data from the first formation test at 610, adjusting the control parameter using the test data at 612, performing a second formation test at 614, and controlling the second formation test using the adjusted control parameter and the test criterion. In some embodiments, the method may further include collecting additional test data from the second formation test, and re-adjusting the control parameter using the additional test data. In certain embodiments, the method may further include controlling a subsequent formation test using the test criterion, the test data, and the adjusted control parameter. In still further embodiments, the method may include re-adjusting the control parameter after each subsequent formation test and based on test data of each immediately preceding formation test, and using the re-adjusted control parameter for each subsequent formation test.

In some embodiments, the collecting 610 and adjusting 612 steps, as well as the determining 506 and the performing 508 steps, occur while downhole. In certain embodiments, the collecting 610 and adjusting 612 steps occur in close temporal proximity, such that they occur during the same trip into the well bore or during the same formation testing run or sequence. Similarly, the determining 506 and the performing 508 steps occur in close temporal proximity such that the resulting formation tests can be optimized during a single trip or testing sequence. In some embodiments, the noted methods include automatically executing the optimized formation test while downhole.

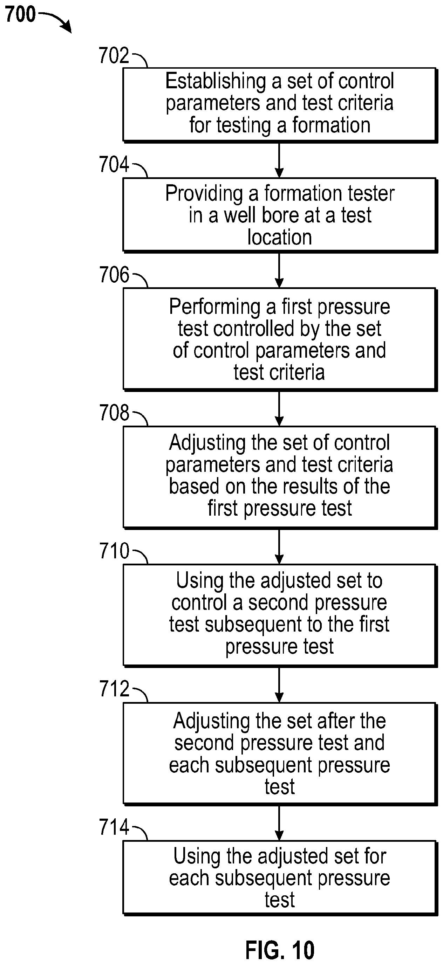

Referring next to Figure 10, an embodiment of an adjustable and optimized formation testing method 700 includes establishing a set of control parameters and test criteria for testing a formation at 702, providing a formation tester in a well bore at a test location at 704, performing a first pressure test that is controlled by the set of control parameters and test criteria at 706, adjusting the set of control parameters and test criteria based on the results of the first pressure test at 708, using the adjusted set to control a second pressure test subsequent to the first pressure test at 710, adjusting the set of control parameters and test criteria after the second pressure test and each subsequent pressure test at 712, and using the adjusted set of control parameters and test criteria for each subsequent pressure test at 714.

In some embodiments, the previously described methods can be used to optimize testing for a formation tester with multiple probes. For example, for the dual probe formation tester 400 of Figure 7, a first formation test is performed using both probes 404. Then, one or more control parameters are adjusted and another formation test is performed using one of the probes 404. Additional information is obtained and combined with the information learned from the first formation test to determine new control parameters for performing a formation test with the other probe 404. The information from the latest formation test can be used to determine whether to use the first or second probe 404 to verify the initial tests or improve the formation test results.

The control parameters described above are input parameters including test control objectives, formation tester specifications, or combinations thereof. In some embodiments, the control parameter is a test flow rate or initial drawdown rate, or a drawdown volume. In further embodiments, the control parameters may include those parameters listed in Table 1 appended to this disclosure. Table 1 includes control parameters that are specified by the engineer or the client or customer, for example. In some embodiments, the parameters can be stored in the formation testing tool, while in other embodiments parameters can be selected for downloading while testing. With reference to Table 1, the listed control parameters are exemplary control parameters that may be used, adjusted, and optimized in the various embodiments disclosed herein. For example, each drawdown pressure can be controlled to a minimum pressure. Previously obtained drawdown/buildup data can be used to optimize the next drawdown/buildup. In some embodiments, a maximum pretest volume that is available is used. In some embodiments, a desired drawdown pressure and time is maintained during testing. In other embodiments, a buildup time is limited based on pressure stability, or a buildup time is limited to no less than a minimum specified or predetermined buildup time. In further embodiments, a buildup time is limited to no greater than a maximum specified or predetermined buildup time.

In some embodiments, when a variable rate control is selected (see Table 1), the initial rate is increased or decreased during the test to maintain a drawdown control pressure. If the formation tester tool parameters do not allow for variable rate control, other control parameters can be used such as a minimum control drawdown pressure to cause the drawdown to terminate. In some embodiments, the primary parameters that are adjusted and or optimized after a formation test include initial drawdown rate, drawdown volume, and minimum drawdown pressure (see Table 1).

The embodiments herein also incorporate or take into account formation tester tool parameters or specifications. With reference to Table 2, appended, exemplary tool parameters include probe size, number of probes, flow rate control range (maximum and minimum), total pretest volume available, minimum control volume, drawdown pressure limits (maximum and minimum), flowline volume, system response time and maximum number of drawdowns possible. However, the listed parameters are not limiting and other exemplary control parameters are provided and contemplated throughout this disclosure. Further, these parameters and their associated objectives can change based on various factors. For example, normally it is desirable to use the maximum pretest volume; however, if the objective is to minimize total testing time, then a large volume is not helpful. Thus, the method and it's optimization algorithms would need to be revised for this alternative objective. In some embodiments, a maximum volume is chosen because it is normally assumed that the best test results are obtained when moving the largest volume of formation fluids as possible from the formation.

In some embodiments, the formation tester parameters or specifications are stored in downhole memory, as described with reference to Figures 1-5. The test control parameters can be similarly stored and accessed. While the control parameters can be varied while testing, in some embodiments it is desirable to store both sets of parameters in the testing database records for each test sequence, to document how each test was performed.

Referring now to Table 3, appended, the embodiments here include test criteria. The test criteria are listed in Table 3, and include maximum drawdown rate, drawdown differential desired, drawdown limit (bubble point), buildup pressure stability, buildup temperature stability, and stability time period. As illustrated by Tables 1-3, some embodiments herein include a control parameter that is a characteristic or value of the formation test or tool that can be directly controlled, while a test criterion is a passive baseline, limit, or boundary that can be used to trigger an action or step in the formation testing process when met.

In certain embodiments, before control parameters can be adjusted and optimized, calculations must be made based on the information gathered and the known control parameters and test criteria. Referring to Table 4, appended, a list of optimization calculation variables is provided, as will be described in more detail below. In some embodiments, controlling each drawdown pressure to a minimum pressure is a significant objective, particularly for the first pretest drawdown. If the first pretest drawdown cannot be controlled above a pressure cutoff point, then any subsequent test optimization may not be possible using traditional drawdown/buildup testing methods. However, controlling to a minimum pressure, in some embodiments, allows calculations to be performed resulting in test adjustment and/or optimization, as will be described below.

In exemplary embodiments, a method for formation testing includes establishing a set of control parameters for testing a formation, performing a first formation test using the testing control parameters, determining optimum control parameters for a next formation test based on results from the previous formation test, performing the next formation test using the optimum control parameters, and then repeating the determining optimum control parameters and performing the next formation test for each subsequent formation test. In further exemplary embodiments, a method for formation testing includes establishing a control parameter and a test criterion for testing a formation, providing a formation tester equipped with the control parameter and the test criterion in a well bore at a test location, performing a first formation test, controlling the first formation test using the control parameter and the test criterion, collecting test data from the first formation test, and adjusting the control parameter using the test data.

In certain embodiments described herein, pressure tests are referred to when describing the methods and processes that exemplify the disclosure. However, it is understood that formation tests other than pressure tests are contemplated. As described, the testing control parameters may include formation tester specifications. In some embodiments, the control parameters may be associated with test control objectives. In some embodiments, the testing control parameter includes test control objectives including at least one parameter that controls a formation test in progress and formation test initial parameters. The formation test initial parameters may include at least one of a flow rate, a drawdown volume, a drawdown time, and a buildup time range. In other embodiments, the test control objectives include controlling each drawdown pressure of the formation tests to a minimum pressure. In still other embodiments, the test control objectives include controlling each drawdown of the formation tests using a predetermined range of flow rates. In certain embodiments, the test control objectives include controlling each drawdown of the formation tests to a maximum drawdown time. In some embodiments, the test control objectives include controlling each buildup of the formation tests to a minimum buildup time. In some embodiments, the test control objectives include controlling each buildup of the formation tests to a maximum buildup time. In further embodiments, the method includes controlling a buildup time based on an objective to terminate the buildup before the maximum buildup time is reached, and wherein the objective can be supplemented with test criteria including a pressure stability, a temperature stability, or a combination thereof. As used in some embodiments herein, a control parameter is a characteristic or value of the formation test or tool that can be directly controlled, while a test criteria is a passive baseline, limit, or boundary that can be used to trigger an action or step in the formation testing process when met.

In some embodiments, the method includes moving a drawdown device to flow a formation fluid at a flow rate into the formation tester for a pretest, thereby producing a drawdown pressure, and automatically controlling the drawdown pressure to a minimum pressure criterion $P_{min}$ by controlling the flow rate or terminating the drawdown device movement. The method may include a minimum pressure $P_{min}$ that is determined by an absolute pressure limit determined using a hydrostatic well bore pressure and tool specification, wherein the absolute pressure limit defines the lowest pressure the formation tester can reduce a pressure from the hydrostatic well bore pressure when performing a drawdown. The method may include terminating the pretest drawdown substantially at the minimum pressure $P_{min}$. Further, the tool specification includes a system response time $\Delta t_{sys}$, and the method further includes predicting a pressure within the system response time $\Delta t_{sys}$, and, when the predicted pressure at $\Delta t_{sys}$ is at or below the minimum pressure $P_{min}$, then terminating the pretest drawdown. Also, the predicting step and the step of terminating when the predicted pressure at $\Delta t_{sys}$ is at or below the minimum pressure $P_{min}$ further includes performing a regression of recorded drawdown pressure data using a predictive function which estimates when the minimum pressure $P_{min}$ will occur.

In some embodiments, one or more of the formation tests includes controlling a buildup time of a pretest. In some embodiments, the buildup time is controlled by not terminating the buildup until at least a minimum buildup time has passed. In some embodiments, the buildup time is controlled by terminating the buildup when the change in pressure or temperature over a time range meets the control parameter or the test criteria. In some embodiments, the buildup time is controlled by terminating the buildup when a predetermined maximum buildup time has been reached.

In some embodiments, the method includes, after the initial drawdown and pretest, determining an optimized drawdown rate $q_{do}$ and a volume. The method may include determining estimated formation parameters from the initial pretest. Then, an optimal drawdown pressure differential $\Delta P_{do}$ is determined based on the previous pretest, test control objectives of Table 1, and formation tester specifications of Table 2. Further, the method includes calculating an initial estimate of the optimized drawdown rate $q_{do}$ using the estimated formation parameters determined from the initial pretest, the optimal drawdown pressure differential $\Delta P_{do}$ based on the previous pretest, the test control objectives of Table 1, and the formation tester specifications of Table 2. Next, it is determined whether the optimized drawdown rate $q_{do}$, a drawdown time $t_{do}$, and a volume $V_{do}$ are within predetermined limits. In some embodiments, the optimized drawdown rate $q_{do}$ includes:

formation parameters from the preceding drawdown including (see also Graph 1 of Appendix A):

$$M_{Exact1} \approx M_{dd} = \frac{14{,}696}{2\pi \cdot 2.54}\left(\frac{q_1}{P_{stop1} - P_{dd\_end1}}\right)\left(\frac{\tau_p}{r_p}\right)$$

$$P_{Exact1} \approx P_{stop1}$$

or if the exact $\alpha$, $\beta$ parameters are used then,

$$P_{Exact} = P_{dd\_end} + \beta$$

$$M_{Exact} = \frac{14{,}696}{2\pi}\left(\frac{q_o}{\beta}\right)\left(\frac{\tau_p}{r_p}\right)\left(1 - e^{\frac{-\Delta t_p}{\alpha}}\right);$$

an optimal drawdown pressure estimate including (see also Graph 2 of Appendix A):

if $\Delta P_{dd\_max} > (P_{hyd} - P_{exact} - \Delta P_{dd})$, then $\Delta P_{do} = \Delta P_{dd}$
else $\Delta P_{do1} = \Delta P_{dd\_max} - (P_{hyd} - P_{exact})$
if $P_{min} < P_{exact} - \Delta P_{dd}$ then $\Delta P_{do} = \Delta P_{dd}$
else $\Delta P_{do2} = P_{exact} - P_{min}$
if $P_{do1} < P_{do2}$ then $\Delta P_{do} = \Delta P_{do1}$
else $\Delta P_{do} = P_{do2}$ ;

an optimal drawdown rate estimate including (see also Graphs 3-7 of Appendix A):

$$q_{do} = \Delta P_{do} M_{Exact}\left(\frac{r_p}{\tau_p}\right)\frac{2\pi}{14{,}696}$$

adjusting the optimal drawdown rate to be within the formation tester limits, including:

if $q_{do} > Q_{max}$ then $q_{do} = Q_{max}$
else if $q_{do} < Q_{min}$ then $q_{do} = Q_{min}$
end and $q_{do}$ is unchanged;

adjusting the drawdown time and the drawdown volume to practical limits, including:

if $q_{do} = Q_{min}$ then $t_{do} = -\alpha \ln\left(1 - \dfrac{P_{Exact} - \Delta P_{do}}{\beta}\right)$

$$V_{do} = t_{do} * q_{do}$$

else $V_{do} = q_{do}*T_{dd\_max}$ and $t_{do} = T_{dd\_max}$
if $V_{do} < V_{pt\_max}$ then $V_{do} = V_{pt\_max}$ and $t_{do} = V_{pt\_max}/q_{do}$.

In some embodiments, the pretest is continued for at least a specified minimum buildup time $t_{bu\_min}$. The method may include various combinations of determining when to terminate the pretest using a buildup stability $\sigma_{bu}$ (p.s.i./sec), determining the buildup stability $\sigma_{bu}$ using a linear regression of a pressure data recorded over a specified stability time period $\Delta t_{bu}$, replacing a previous buildup stability $\sigma$ with the new buildup stability $\sigma_{bu}$, and transmitting the new buildup stability $\sigma_{bu}$ in real time. In some embodiments, the buildup stability $\sigma_{bu}$ is determined by performing a linear regression over a predetermined period of time in the control parameter or the test criteria set to determine the slope (p.s.i./sec), and updating the buildup stability $\sigma_{bu}$ as the buildup progresses. The method may further include terminating the pretest if stability $\sigma < \sigma_{bu}$ is reached after the minimum buildup time $t_{bu\_min}$, and/or continuing the buildup until either stability $\sigma < \sigma_{bu}$ or the maximum buildup time $t_{bu\_max}$ is reached, then terminating the pretest. In some embodiments, the method includes signaling the pretest termination using an uplink command during a mud pumps-on mode or continuing the buildup to the maximum buildup time $t_{bu\_max}$ according to: if the minimum buildup time $t_{bu\_min}$ is reached, and the buildup stability is less than the buildup stability of the test criteria set, then the buildup is terminated and either a new formation test can start or the formation testing is completed.

In some embodiments, the method includes signal pulsing the buildup stability $\sigma_{bu}$ to the surface of a well. In some embodiments, the method includes indicating supercharging with a negative value of the buildup stability $\sigma_{bu}$ and changing a testing procedure in response to the negative buildup stability $\sigma_{bu}$. In other embodiments, the method includes indicating that a mudcake thickness has substantially stabilized if the buildup stability $\sigma_{bu}$ indicates a pressure is increasing, and estimating a supercharge pressure using a stable mudcake model. In still other embodiments, the method includes indicating that a mudcake thickness is increasing or unstable if the buildup stability $\sigma_{bu}$ is negative or a pressure is decreasing, and estimating a supercharge pressure using a dynamic mudcake model.

In some embodiments, the method includes maintaining a drawdown pressure differential $\Delta P_{do}$ during the second or subsequent formation test.

In some embodiments, the control parameter comprises the test control parameters of Table 1 and the formation tester tool parameters of Table 2.

In some embodiments, the control parameter is stored in a formation tester memory, downloaded while testing, or a combination thereof. The method may include automatically executing the adjusting and using steps of the method disclosed herein while downhole. Further, the optimized formation test may be executed automatically while downhole. The methods described herein can be used as an advisor to the formation tester operator or implemented with the formation tester for fully automated testing. For formation testing while drilling tools (FTWD), for example, downhole implementation of the testing and optimization methods described herein provide benefits due to limited communication with the formation tester while downhole. Using the methods described the formation tester can adapt to conditions with no intervention by an operator. All of the methods, processes, and logic can be implemented within the real-time control software without requiring the operator to directly communicate with the formation tester. This enables a formation tester to work autonomously and achieve the test objectives.

In some embodiments, an adjusted value of the test criteria set comprises a bubble point drawdown limit $P_{bp}$ (Table 3).

In some embodiments, the method includes storing the control parameter and/or the test criterion in a testing database, and documenting at least one of the formation tests in the testing database.

*Appendix A*

| Table 1 - Test Control Parameters | | |
|---|---|---|
| Rate Selection Fixec or Variable | | On/Off |
| Initial Drawdown Rate | $q_1$ | cc/sec |
| Drawdown Volume | $V_1$ | 10cc |
| Drawdown Control Pressure | $\Delta P_{dc}$ | psia |
| Minimum Drawdown Pressure | $P_{min}$ | psia |
| Maximum Drawdown Time | $T_{dd\_max}$ | sec |
| Minimum Drawdown Time | $T_{dd\_min}$ | sec |
| Maximum Buildup Time | $T_{bu\_max}$ | sec |
| Minimum Buildup Time | $T_{bu\_min}\ min$ | sec |
| Number of Drawdowns/Buildup Tests | $N_{dd}$ | 2,3,4,.. |

| Table 2 - Tool Parameters | | |
|---|---|---|
| Probe 1 Radius | $r_{p1}$ | in |
| Probe 2 Radius (optional) | $r_{p2}$ | in |
| Minimum Flow Rate | $Q_{max}$ | cc/sec |
| Maximum Flow Rate | $Q_{min}$ | cc/sec |
| Minimum Pretest Control Volume | $V_{pt\_max}$ | CC |
| Total Pretest Volume | $V_{pt\_total}$ | CC |
| Maximum Drawdown Limit | $\Delta P_{dd\_max}$ | psi |
| Minimum Drawdown Limit | $\Delta P_{dd\_min}$ | psi |
| Flowline Volume | $V_{fl}$ | cc |
| System Response Time | $\Delta t_{sys}$ | sec |
| Floating Drawdown Points | n | > 3 |

| Table 3 - Test Criteria | | |
|---|---|---|
| Maximum Drawdown Rate | $q_{dd\_max}$ | cc/sec |
| Drawdown Differential Desired | $\Delta P_{dd}$ | psi |
| Drawdown Limit (Bubble Point) | $P_{bp}$ | psia |
| Bui dup Pressure Stability | $\sigma_{bu}$ | psi/min |
| Bui dup Temperature Stability | $v_{bu}$ | F°/min |
| Stability Time Period | $t_{bu}$ | sec |

| Table 4 - Optimization Calculation Variables | | |
|---|---|---|
| Probe radius | $r_p$ | in |

(continued)

| Table 4 - Optimization Calculation Variables | | |
|---|---|---|
| Prove flow coefficient | $\tau_p$ | N/A |
| Exact Mobility | $M_{Exact}$ | mD/cp |
| Exact Mobility equals $M_{dd}$ when $P_{Exact1}=P_{stop1}$ | $M_{Exact1}$ | mD/cp |
| Drawdown Mobility | $M_{dd}$ | mD/cp |
| Final buildup pressure using Exact function | $P_{Exact}$ | psia |
| Measured pretest flow rate | $q_o$ | cc/sec |
| Measured pressure at end of drawdown | $P_{dd\_end}$ | psia |
| Measured hydrostatic pressure | $P_{hyd}$ | psia |
| Measured drawdown time period | $\Delta t_p$ | sec |
| Measured Exact function time constant | $\alpha$ | sec |
| Measured Exact function magnitude | $\beta$ | psi |
| Optimized drawdown pressure differentials estimates | $\Delta P_{do},\ \Delta P_{do1}\ \&\ \Delta P_{do2}$ | psi |
| Optimized drawdown time | $t_{do}$ | sec |
| Optimized drawdown rate | $q_{do}$ | cc/sec |
| Optimized drawdown volume | $V_{do}$ | cc |

***Determine Mobility & Buildup Pressure***

$$M_{Exact1} = \frac{14{,}696}{2\pi} \left( \frac{q_1}{\beta_1} \right) \left( \frac{\tau_p}{r_{p1}+r_{p1}} \right) \left( 1 - e^{\frac{-\Delta t_p}{\alpha}} \right)$$

$$M_{Exact1} \approx M_{dd} = \frac{14{,}696}{2\pi} \left( \frac{q_1}{P_{stop1}-P_{dd\_end1}} \right) \left( \frac{\tau_p}{r_{p1}+r_{p2}} \right)$$

$$\mathrm{P}_{Exact} = \mathrm{P}_{dd\_end} + \beta \approx \mathrm{P}_{stop}$$

Where:
$\Delta t_p$    *draw down production time*
$\alpha$    *Exact curve fit time constant (sec)*
$\beta$    *Exact curve fit build up constant (psi)*

Graph 1

*First Determine Optimal Drawdown $\Delta P_{do}$*

$$\text{If } \Delta P_{dd\_max} > (P_{hyd} - P_{exact} - \Delta P_{dd}), \text{ Then } \Delta P_{do1} = \Delta P_{dd}$$
$$\text{Else } \Delta P_{do1} = \Delta P_{dd\_max} - (P_{hyd} - P_{exact})$$
$$\text{If } P_{min} < P_{exact} - \Delta P_{dd} \text{ Then } \Delta P_{do2} = \Delta_{Pdd}$$
$$\text{Else } \Delta P_{do2} = P_{exact} - P_{min}$$
$$\text{If } P_{do1} < P_{do2} \text{ Then } \Delta P_{do} = \Delta P_{do1}$$
$$\text{Else } \Delta P_{do} = P_{do2}$$

Graph 2

*Next Optimize Second Drawdown Probe1, Fixed Rate*

$$Q_{do} = \Delta P_{do} M_{Exact1} \left( \frac{r_{p1}}{\tau_p} \right) \frac{2\pi}{14,696} \qquad \textit{If } T_{do} > T_{dd\_max} \textit{ Then}$$

$$V_{do} = (V_{pt\_max} - V_i)/2 \qquad\qquad V_{do} = T_{dd\_max} \cdot Q_2$$

$$T_{do} = V_{do} / Q_{do}$$

Pressure (psi)

$\Delta P_{dd}$

$Q_i$      $Q_2$      $T$

Graph 3

$\Delta t_{dd1}$      $\Delta t_{dd2}$      $t_{stop}$

**Optimize Second Drawdown Probe1, Fixed Rate**

$$Q_{do} = \Delta P_{do} M_{Exact1} \left( \frac{r_{p1}}{\tau_p} \right) \frac{2\pi}{14,696} \qquad \textit{If } T_{do} > T_{dd\_max} \textit{ Then}$$

$$V_{do} = (V_{pt\_max} - V_i)/2 \qquad\qquad V_{do} = T_{dd\_max} \cdot Q_2$$

$$T_{do} = V_{do} / Q_{do}$$

Pressure (psi)

$\Delta P_{dd}$

$P_{min}$

$Q_i$

$Q_f$      $Q_2$      $T$

Graph 4

$\Delta t_{dd1}$      $\Delta t_{dd2}$      $t_{stop}$

*Tight Tests - Limit Next Drawdown to $P_{min}$*

$$Q_{do} = \Delta P_{do} M_{Exact1} \left( \frac{r_{p1}}{\tau_p} \right) \frac{2\pi}{14,696} \qquad If \ T_{do} > T_{dd\_max} \ Then$$

$$V_{do} = (V_{pt\_max} - V_i)/2 \qquad\qquad V_{do} = T_{dd\_max} \cdot Q_2$$

$$T_{do} = V_{do}/Q_{do}$$

Graph 5

*Tight Tests - Limit Next Drawdown to $P_{min}$*

$$Q_{do} = \Delta P_{do} M_{Exact1}\left(\frac{r_{p1}}{\tau_p}\right)\frac{2\pi}{14,696} \qquad If\ T_{do} > T_{dd\_max}\ Then$$

$$V_{do} = (V_{pt\_max} - V_i)/2 \qquad\qquad V_{do} = T_{dd\_max} \cdot Q_2$$

$$T_{do} = V_{do} / Q_{do}$$

Graph 6

**Tight Tests**

$$Q_{do} = \Delta P_{do} M_{Exact1}\left(\frac{r_{p1}}{\tau_p}\right)\frac{2\pi}{14,696} \qquad If\ Q_{do} < Q_{min}\ Then\ q_{do} = Q_{min}$$

$$V_{do} = (V_{pt\_max} - V_i)/2 \qquad t_{dd} = -\alpha \ln\left(1 - \frac{P_{Exact} - \Delta P_{do}}{\beta}\right)$$

$$T_{do} = V_{do} / Q_{do} \qquad\qquad V_{do} = t_{dd} * q_{do}$$

Graph 7

**Claims**

1. A method for formation testing comprising:

    establishing control parameters and a test criterion for testing a formation (9);
    providing a formation tester (400) with multiple probes (404), the formation tester (400) equipped with the control parameters and the test criterion in a well bore at a test location;
    performing a first formation test using the multiple probes (404);
    controlling the first formation test using the control parameters and the test criterion;
    collecting test data from the first formation test;
    adjusting the control parameters using the test data;
    performing a subsequent formation test using a first probe;
    collecting additional test data from the subsequent formation test;
    combining the test data and additional test data obtained from the first formation test and subsequent formation test to determine new control parameters for performing a further formation test using a second probe;
    re-adjusting the control parameters to the new control parameters after the subsequent formation test; and
    using the new control parameters for a further formation test using the second probe.

2. The method of claim 1 further comprising:
   controlling the subsequent formation test using the adjusted control parameters and the test criterion.

3. The method of claim 1 further comprising controlling the subsequent formation test using the test criterion, the test data, and the adjusted control parameters.

4. The method of claim 1 further comprising automatically executing the collecting and adjusting steps while downhole.

5. The method of claim 1 further comprising automatically executing the re-adjusting step while downhole.

6. The method of claim 1 wherein the control parameters include test control objectives.

7. The method of claim 6 wherein the control parameters further include formation tester specifications.

8. A system for formation testing comprising:

    a formation tester (400) with multiple probes (404); and
    an electronic storage medium (74) and a processor (76) including control parameters and a test criterion for testing a formation;
    wherein the electronic storage medium and the processor are configured to:

        execute a first formation test using the multiple probes (404);
        control the first formation test using the control parameters and the test criterion;
        collect test data from the first formation test;
        adjust the control parameters using the test data;
        execute a subsequent formation test using a first probe;
        collect additional test data from the subsequent formation test;
        combine the test data and additional test data obtained from the first formation test and subsequent formation test to determine new control parameters for performing a further formation test using a second probe;
        re-adjust the control parameters to the new control parameters after the subsequent formation test; and
        use the new control parameters for a further formation test using the second probe.

9. The system of claim 8 wherein the electronic storage medium (74) and the processor (76) are further configured to:
   control the subsequent formation test using the adjusted control parameters and the test criterion.

10. The system of claim 8 wherein the electronic storage medium (74) and the processor (76) are further configured to control the subsequent formation test using the test criterion, the test data, and the adjusted control parameters.

**EP 2 810 106 B1**

**Patentansprüche**

1. Verfahren zum Formierungstest, Folgendes umfassend:

   Einrichten von Steuerungsparametern und eines Testkriteriums zum Testen einer Formierung (9);
   Bereitstellen einer Formierungstestvorrichtung (400) mit einer Mehrzahl von Sonden (404), wobei die Formierungstestvorrichtung (400) mit den Steuerungsparametern und dem Testkriterium in einem Bohrloch an einer Teststelle ausgerüstet ist;
   Durchführen eines ersten Formierungstests unter Verwendung der Mehrzahl von Sonden (404);
   Steuern des ersten Formierungstests unter Verwendung der Steuerungsparameter und des Testkriteriums;
   Sammeln von Testdaten von dem ersten Formierungstest;
   Anpassen der Steuerungsparameter unter Verwendung der Testdaten;
   Durchführen eines nachfolgenden Formierungstests unter Verwendung einer ersten Sonde;
   Sammeln zusätzlicher Testdaten von dem nachfolgenden Formierungstest;
   Kombinieren der Testdaten und der zusätzlichen Testdaten, die von dem ersten Formierungstest und dem nachfolgenden Formierungstest erhalten wurden, um neue Steuerungsparameter zum Durchführen eines weiteren Formierungstests unter Verwendung einer zweiten Sonde zu bestimmen;
   Neuanpassen der Steuerungsparameter an die neuen Steuerungsparameter nach dem nachfolgenden Formierungstest; und
   Verwenden der neuen Steuerungsparameter für einen weiteren Formierungstest unter Verwendung der zweiten Sonde.

2. Verfahren nach Anspruch 1, ferner Folgendes umfassend:
   Steuern des nachfolgenden Formierungstests unter Verwendung der angepassten Steuerungsparameter und des Testkriteriums.

3. Verfahren nach Anspruch 1, ferner das Steuern des nachfolgenden Formierungstests unter Verwendung des Testkriteriums, der Testdaten und der angepassten Steuerungsparameter umfassend.

4. Verfahren nach Anspruch 1, ferner das automatische Ausführen des Sammel- und des Anpassungsschritts untertage umfassend.

5. Verfahren nach Anspruch 1, ferner das automatische Ausführen des Neuanpassungsschritts untertage umfassend.

6. Verfahren nach Anspruch 1, wobei die Steuerungsparameter Teststeuerungsziele beinhalten.

7. Verfahren nach Anspruch 6, wobei die Steuerungsparameter ferner Formierungstestvorrichtungsspezifikationen beinhalten.

8. System zum Formierungstest, Folgendes umfassend:

   eine Formierungstestvorrichtung (400) mit einer Mehrzahl von Sonden (404); und
   ein elektronisches Speichermedium (74) und einen Prozessor (76), einschließlich der Steuerungsparameter und eines Testkriteriums zum Testen einer Formierung;
   wobei das elektronische Speichermedium und der Prozessor zu Folgendem konfiguriert sind:

   Ausführen eines ersten Formierungstests unter Verwendung der Mehrzahl von Sonden (404);
   Steuern des ersten Formierungstests unter Verwendung der Steuerungsparameter und des Testkriteriums;
   Sammeln von Testdaten von dem ersten Formierungstest;
   Anpassen der Steuerungsparameter unter Verwendung der Testdaten;
   Ausführen eines nachfolgenden Formierungstests unter Verwendung einer ersten Sonde;
   Sammeln von zusätzlichen Testdaten von dem nachfolgenden Formierungstest;
   Kombinieren der Testdaten und der zusätzlichen Testdaten, die von dem ersten Formierungstest und dem nachfolgenden Formierungstest erhalten wurden, um neue Steuerungsparameter zum Durchführen eines weiteren Formierungstests unter Verwendung einer zweiten Sonde zu bestimmen;
   Neuanpassen der Steuerungsparameter an die neuen Steuerungsparameter nach dem nachfolgenden Formierungstest; und
   Verwenden der neuen Steuerungsparameter für einen weiteren Formierungstest unter Verwendung der zweiten Sonde.

**9.** System nach Anspruch 8, wobei das elektronische Speichermedium (74) und der Prozessor (76) ferner zu Folgendem konfiguriert sind:
Steuern des nachfolgenden Formierungstests unter Verwendung der angepassten Steuerungsparameter und des Testkriteriums.

**10.** System nach Anspruch 8, wobei das elektronische Speichermedium (74) und der Prozessor (76) ferner dazu konfiguriert sind, den nachfolgenden Formierungstest unter Verwendung des Testkriteriums, der Testdaten und der angepassten Steuerungsparameter zu steuern.

**Revendications**

**1.** Procédé d'essais de formation comprenant :

l'établissement de paramètres de commande et d'un critère d'essai pour tester une formation (9) ;
la fourniture d'un testeur de formation (400) avec de multiples sondes (404), le testeur de formation (400) étant équipé des paramètres de commande et du critère d'essai dans un puits de forage au niveau d'un emplacement d'essai ;
la réalisation d'un premier essai de formation à l'aide des multiples sondes (404) ;
la commande du premier essai de formation à l'aide des paramètres de commande et du critère d'essai ;
la collecte de données d'essai à partir du premier essai de formation ;
le réglage des paramètres de commande à l'aide des données d'essai ;
la réalisation d'un essai de formation ultérieur à l'aide d'une première sonde ;
la collecte de données d'essai supplémentaires à partir de l'essai de formation ultérieur ;
la combinaison des données d'essai et des données d'essai supplémentaires obtenues à partir du premier essai de formation et de l'essai de formation ultérieur pour déterminer de nouveaux paramètres de commande afin de réaliser un autre essai de formation à l'aide d'une seconde sonde ;
le réglage supplémentaire des paramètres de commande aux nouveaux paramètres de commande après l'essai de formation ultérieur ; et
l'utilisation des nouveaux paramètres de commande pour un autre essai de formation à l'aide de la seconde sonde.

**2.** Procédé selon la revendication 1, comprenant en outre :
la commande de l'essai de formation ultérieur à l'aide des paramètres de commande réglés et du critère d'essai.

**3.** Procédé selon la revendication 1, comprenant en outre la commande de l'essai de formation ultérieur à l'aide du critère d'essai, des données d'essai et des paramètres de commande réglés.

**4.** Procédé selon la revendication 1, comprenant en outre l'exécution automatique des étapes de collecte et de réglage en fond de puits.

**5.** Procédé selon la revendication 1, comprenant en outre l'exécution automatique de l'étape de réglage supplémentaire en fond de puits.

**6.** Procédé selon la revendication 1, dans lequel les paramètres de commande comprennent des objectifs de commande d'essai.

**7.** Procédé selon la revendication 6, dans lequel les paramètres de commande comprennent en outre des spécifications de testeur de formation.

**8.** Système d'essais de formation comprenant :

un testeur de formation (400) avec de multiples sondes (404) ; et
un support de stockage électronique (74) et un processeur (76) comprenant des paramètres de commande et un critère d'essai pour tester une formation ;
dans lequel le support de stockage électronique et le processeur sont configurés pour :

réaliser un premier essai de formation à l'aide des multiples sondes (404) ;

commander le premier essai de formation à l'aide des paramètres de commande et du critère d'essai ;

collecter des données d'essai à partir du premier essai de formation ;

régler les paramètres de commande à l'aide des données d'essai ;

réaliser un essai de formation ultérieur à l'aide d'une première sonde;

collecter des données d'essai supplémentaires à partir de l'essai de formation ultérieur ;

combiner les données d'essai et les données d'essai supplémentaires obtenues à partir du premier essai de formation et de l'essai de formation ultérieur pour déterminer de nouveaux paramètres de commande afin de réaliser un autre essai de formation à l'aide d'une seconde sonde ;

régler à nouveau les paramètres de commande aux nouveaux paramètres de commande après l'essai de formation ultérieur ; et

utiliser les nouveaux paramètres de commande pour un autre essai de formation à l'aide de la seconde sonde.

9. Système selon la revendication 8, dans lequel le support de stockage électronique (74) et le processeur (76) sont en outre configurés pour :
commander l'essai de formation ultérieur à l'aide des paramètres de commande réglés et du critère d'essai.

10. Système selon la revendication 8, dans lequel le support de stockage électronique (74) et le processeur (76) sont en outre configurés pour commander l'essai de formation ultérieur à l'aide du critère d'essai, des données d'essai et des paramètres de commande réglés.

**FIG. 1**

**FIG. 2**

FIG. 3

**FIG. 4**

**FIG. 5**

**FIG. 6**

**FIG. 7**

500

502
```
Establishing control parameters
for testing a formation
```

504
```
Performing a first formation
test using the control
parameters
```

506
```
Determining optimum control
parameters for a next formation
test based on results from
the previous formation test
```

508
```
Performing the next formation
test using the optimum control
parameters
```

**FIG. 8**

600

602
Establishing a control parameter
and a test criterion for testing
a formation

604
Providing a formation
tester in a well bore
at a test location

606
Performing a first
formation test

608
Controlling the first formation
test using the control parameter
and the test criterion

610
Collecting test data from
the first formation test

612
Adjusting the control parameter
using the test data

614
Performing a second
formation test

616
Controlling the second formation
test using the adjusted control
parameter and the test criterion

FIG. 9

700

702
Establishing a set of control
parameters and test criteria
for testing a formation

704
Providing a formation tester
in a well bore at a test
location

706
Performing a first pressure
test controlled by the set
of control parameters and
test criteria

708
Adjusting the set of control
parameters and test criteria
based on the results of the
first pressure test

710
Using the adjusted set to
control a second pressure
test subsequent to the first
pressure test

712
Adjusting the set after the
second pressure test and
each subsequent pressure
test

714
Using the adjusted set for
each subsequent pressure
test

FIG. 10

**EP 2 810 106 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004026125 A1